# EUROPÄISCHE PATENTSCHRIFT

(11) **EP 2 464 510 B1**
(45) Veröffentlichungstag und Bekanntmachung des Hinweises auf die Patenterteilung: **25.10.2017**
(21) Anmeldenummer: 10737864.8
(22) Anmeldetag: 22.07.2010
(51) Int. Cl.: B32B 5/16, B32B 27/12, B31B 70/36, B31B 150/20, B31B 160/20, B31B 170/20, B65D 30/18, B65D 30/24, B29C 65/40, B29C 65/52

(54) **VERFAHREN ZUR HERSTELLUNG EINES SACKS ODER EINES BEUTELS MIT KUNSTSTOFFVLIESMATERIAL**
METHOD FOR PRODUCING A SACK OR A BAG HAVING PLASTIC NON-WOVEN MATERIAL
PROCÉDÉ DE PRODUCTION D'UN SAC OU SACHET À L'AIDE D'UNE VOILE DE MATIÈRE PLASTIQUE

(30) Priorität: 10.08.2009 DE 102009036556
(43) Veröffentlichungstag der Anmeldung: 20.06.2012
(73) Patentinhaber: Windmöller & Hölscher KG, 49525 Lengerich (DE)
(72) Erfinder: KÖHN, Uwe, Osnabrück 49078 (DE)
(86) Internationale Anmeldenummer: PCT/EP2010/060637
(87) Internationale Veröffentlichungsnummer: WO 2011/018318

(56) Entgegenhaltungen:
- WO-A1-01/03802
- AT-B- 254 506
- AT-B- 254 506
- AT-U2- 10 628
- AT-U2- 10 628
- DE-A1- 1 938 769
- DE-A1- 1 938 769
- DE-A1- 3 046 036
- DE-A1- 3 046 036
- DE-A1- 4 033 499
- DE-A1- 4 033 499
- DE-A1- 19 502 255
- DE-A1- 19 502 255
- DE-A1- 19 930 070
- DE-A1- 19 930 070
- DE-A1-102004 013 469
- DE-A1-102004 013 469
- DE-A1-102004 022 291
- DE-A1-102005 060 032
- DE-A1-102006 041 275
- DE-A1-102006 041 275
- DE-A1-102007 004 244
- DE-A1-102007 004 244
- DE-A1-102007 018 579
- DE-B- 1 150 567
- DE-B- 1 150 567
- DE-T2- 69 904 844
- DE-T2- 69 904 844
- US-A- 2 587 422
- US-A- 2 587 422
- US-A- 3 578 543
- US-A- 3 578 543
- US-A- 3 908 522
- US-A- 3 908 522
- US-A- 3 948 436
- US-A- 4 478 670
- US-A- 4 478 670
- US-A- 4 721 501
- US-A- 4 721 501
- US-A- 4 734 142
- US-A- 4 734 142
- US-A1- 2007 017 623
- US-A1- 2007 017 623
- US-A1- 2007 274 612
- US-A1- 2007 274 612
- US-A1- 2009 098 992
- US-A1- 2009 098 992

## Beschreibung

Die Erfindung betrifft ein Verfahren zur Herstellung eines Sacks oder eines Beutels, welcher zumindest zum Teil Kunststoffvliesmaterial umfasst, nach dem Oberbegriff des Anspruchs 1.

Säcke und Beutel, welche Kunststoffvliesmaterial umfassen, sind bereits bekannt. Die DE 10 2007 018 579 A1 beschreibt Baumaterialsäcke, die Kunststoffvlies umfassen. Dieses Kunststoffvlies bildet eine Schicht einer Sackwand. Die zweite Schicht wird von einem Film gebildet. Dabei bildet das Vlies die Außenschicht der Sackwand. Es wird in dieser Anmeldung ein Herstellungsverfahren für die Sackwände angegeben. Ein Verfahren für die Herstellung von Säcken oder Beuteln ist der genannten Druckschrift allerdings nicht zu entnehmen. Ein Kunststoffvlies ist eine Anordnung von Kunststofffasern, welche, teilweise unter Einwirkung von Wärme, miteinander verpresst werden.

Die DE 40 33 499 A1 offenbart ein Verfahren und eine Vorrichtung, bei dem von einer Rolle eine bereits mit einem Streifen mit Löchern versehene Folienbahn abgewickelt wird. Dieser Streifen mit Löchern wird mit einem streifenförmigen Vliesmaterial beaufschlagt, welches mittels einem Schweißverfahren an der Folienbahn befestigt wird. Sodann erfolgen die Schlauchbildung und die eigentliche Herstellung der Säcke oder Beutel.

Die DE 10 2004 022 291 A1 offenbart eine Vorrichtung zur Herstellung von Säcken, insbesondere aus Papier. Hier werden allgemein die Vorrichtungsbestandteile und die Herstellungsschritte allgemein erwähnt. Hierzu zählen Abwinklungen, eine Schlauchmaschine und ein Bodenleger.

Aufgabe der vorliegenden Erfindung ist es, ein Verfahren und eine Vorrichtung vorzuschlagen, mit welchen Säcke oder Beutel herstellbar sind, welche Kunststoffvlies umfassen.

Die Aufgabe wird durch ein Verfahren nach dem Anspruch 1 gelöst.

Das Flachbahnmaterial enthält dabei Kunststoffvliesmaterial, ist einlagig und kann ein- oder mehrschichtig sein. In dieser Patentanmeldung werden Schichten des Materials und Lagen der Halbzeuge und fertigen Produkte unterschieden. Die Schichten bestehen dabei aus Materialien unterschiedlicher Eigenschaften, wobei bei mehrschichtigem Flachbahnmaterial diese Schichten in der Regel flächig miteinander verbunden sind.

Das Flachbahnmaterial wird dabei vorteilhafterweise als Flachbahnwickel zur Verfügung gestellt. Ein solcher Wickel ist eine vorteilhafte Lagerform, da sie kompakt ist, und ist bei der Entnahme des Materials einfach handzuhaben. Das Abwickeln des Materials erfolgt in einer Abwickeleinrichtung.

Das Flachmaterial wird nun einer Schlauchbildungseinrichtung zugeführt, in welcher aus dem Flachmaterial ein Schlauch gebildet wird, in dem die Seitenkanten so umgeschlagen werden, dass sie sich anschließend in einem Überlappungsbereich überlappen. Dazu wird das Flachbahnmaterial mittels geeigneter Transportelemente, wie beispielsweise Transportwalzenpaare, vorgezogen und/oder vorgeschoben. Passend platzierte Leitelemente, zum Beispiel Leitbleche, können nun einen Teilbereich der Bahn auf der Transportebene halten, während weitere Leitelemente die Seitenbereiche umschlagen. Dabei wird der erste Seitenbereich vorteilhafterweise vor dem zweiten Seitenbereich umgeschlagen, so dass die Seitenkante des zweiten Seitenbereiches auf der Kante des ersten, bereits vollständig umgeschlagenen Seitenbereichs aufliegt. Während des Aufeinanderlegens werden die sich überlappenden Bereiche miteinander verbunden. Auf diese Weise wird ein Schlauch mit einer Längsnaht erzeugt.

Der so erzeugte Schlauch wird in einem weiteren Produktionsschritt zu Schlauchstücken vereinzelt. Dieser Vorgang erfolgt in einer dazu geeigneten Vereinzelungsvorrichtung. Das kann ein mechanisches Schneidwerkzeug genauso wie eine berührungslose Schneideinrichtung (Laserstrahlschneideinrichtung, Wasserstrahlschneideinrichtung) sein. Viele andere Trenneinrichtungen sind hier denkbar.

Jedes einzelne Schlauchstück wird nun mittels einer Transporteinrichtung transportiert, um das Anformen eines Bodens an zumindest einem Ende des Schlauchstücks zu ermöglichen. Hierzu steht eine Bodenbildungsvorrichtung zur Verfügung. Soll an beiden Enden ein Boden gebildet werden, so bietet sich eine Bodenbildungseinrichtung an, in welcher die Schlauchstücke quer zu ihrer Erstreckungsrichtung transportiert werden. Soll jedoch nur an einem Ende ein Boden angeformt werden, so kann dies auf gleiche Weise erfolgen, wobei dann ein Teil der Bodenbildungseinrichtung inaktiv bleibt. Es können in diesem Fall aber auch Vorrichtungen vorgesehen werden, die das Schlauchstück entlang ihrer Erstreckungsrichtung transportieren. Die zur Bodenformung erforderlichen Arbeitsschritte sind jedoch unabhängig von der Ausrichtung der Schlauchstücke relativ zur Transportrichtung.

Zur Verbindung der beiden sich nach dem Einschlagen überlappenden Bereiche bei der Schlauchbildung müssen diese in einer geeigneten Vorrichtung und mit einem geeigneten Verfahren miteinander verbunden werden. Es sind verschiedene Fügeverfahren denkbar. Dabei ist zu berücksichtigen, dass nun die Abfolge der Schichten der beiden Lagen gleich ist, so dass beispielsweise eine Vliesinnenschicht und eine Kunststoffaußenschicht aufeinander liegen. Besonders vorteilhaft ist es daher, zu diesem Zweck eine Extrusionseinrichtung vorzusehen, mit welcher flüssiger Kunststoff auf die spätere Verbindungsfläche aufextrudiert wird. Dieses Verfahren bietet sich zur Verbindung verschiedenartiger Schichten, wie das Vlies und das Kunststoffmaterial, an.

Dabei ist die Extrusionseinrichtung möglichst an einer Stelle anzuordnen, an der bereits der erste Seitenbereich umgeschlagen ist. Nun kann das Exdrudat aufgetragen und anschließend der zweite Seitenbereich auf den ersten Seitenbereich aufgelegt werden. Vorteilhafterweise ist eine darauf folgende Verpresseinrichtung vorgesehen, mit welcher die Extrudatverbindung nochmals verpresst wird. Erforderlichenfalls kann weiterhin eine Kühleinrichtung zur Kühlung des Extrudats und damit der Verbindung vorgesehen werden.

Es kann aber auch, je nach Inhaltsstoffen der Schichten, die Anwendung anderer Fügeverfahren vorteilhaft sein. Beispielsweise kann das Vlies Kunststofffasern umfassen. In diesem Fall kann das Heißluftsiegeln ein einfach anzuwendendes Verfahren sein, bei dem eine zumindest hinsichtlich der Heißlufttemperatur regelbare Heißluftdüse vorzusehen ist. Diese Heißluftdüse ist an einer Stelle anzuordnen, hinter der sich die zu verbindenden Seitenbereiche berühren. Die Heißluftdüse bewirkt ein Anschmelzen des Kunststoffes des Vlieses und der Kunststoffschicht, so dass ein unmittelbar anschließendes Zusammenpressen der Fügenaht eine dauerhafte Verbindung hervorruft. Sollte jedoch die Vlieslage nicht ein hierzu geeignetes Material umfassen, so ist denkbar, eine Seitenkante beidseitig der Materiallage mit einer Kunststoffschicht zu versehen, wobei die Kunststoffschicht auf der zweiten Seite nur die Breite des Überlappungsbereiches aufweist.

Weitere Fügeverfahren sind denkbar. So kann anstelle eines Extrudats ein Klebstoff aufgebracht werden. Auch an sich bekannte Ultraschallschweißverfahren sind einsetzbar. Denkbar ist weiterhin der Einsatz von elektromagnetischer Strahlung, also von Licht.

In einer weiteren vorteilhaften Ausgestaltung der Erfindung ist vorgesehen, die entstandene Längsnaht, also die Überlappung der Seitenbereich zu kühlen.

Dies erfolgt mit einer geeigneten Kühlvorrichtung. So kann beispielsweise eine Anpresswalze, welche für das Verpressen der Naht sorgt, gekühlt sein, so dass gleichzeitig eine Kühlung erfolgt. Die Anpresswalze kann dazu von einem Kühlmedium durchströmt werden.

Das Kunststoffvliesmaterial ist durchlässig für viele Gase. Diese Materialeigenschaft ist besonders wichtig beim Befüllen der später entstehenden Säcke, wo die vorhandene Luft entweichen können muss. Die beschriebene Kunststoffbeschichtung verhindert jedoch das Entweichen der Luft. Daher ist gemäß der Erfindung vorgesehen, das Flachbahnmaterial und/oder den Schlauch zu perforieren, was mit einer geeigneten Perforationseinrichtung, wie etwa einer Nadelwalze, erfolgen kann. Wichtig ist jedoch, dass die Perforation vor dem Vereinzeln des Schlauches zu Schlauchstücken erfolgt, da nach der Vereinzelung die Handhabung der Schlauchstück für die Perforation komplizierter ist.

Nach der Vereinzelung des Schlauches zu Schlauchstücken schließt sich die Bodenbildung an. Dazu wird ein Schlauchstück durch die Bodenbildungseinrichtung transportiert, die verschiedene Bearbeitungsstationen umfasst. In einer ersten solchen Station wird zunächst ein Ende oder beide Enden des Schlauchstücks aufgezogen. Dabei kann eine Lage aufgezogen und auf sich selbst um 180 Grad zurückgefaltet werden, wobei eine Falzlinie entsteht, die bereits zuvor mit einem geeigneten Prägewerkzeug eingeprägt sein kann. Es können aber auch beide Lagen um 90 Grad aufgezogen werden. Dabei kann das gesamte Ende zuvor bereits einmal um 90 Grad umgefaltet worden sein. In beiden genannten Arten liegen die so erzeugten Laschen und Dreieckstaschen in der Ebene des Schlauchstücks. Der offene Boden ist nun von oben sehr gut erreichbar. In einer Alternative können beide Lagen um jeweils 90 Grad umgeklappt sein, ohne dass das Ende zuvor umgeklappt wurde. Die Ebene des geöffneten Bodens liegt nun orthogonal zur Ebene des Schlauchstücks. Diese Vorgehensweise bietet sich bei bestimmten Sackformaten an, bei denen der spätere Schlauchkörper nur eine kleine Erstreckung aufweist.

Nach der Bodenöffnung erfolgt die Bodenschließung, bei der die äußeren Bereiche der Laschen wieder zurückgefaltet werden. Hierzu können - ähnlich wie bei der bereits weiter oben beschriebenen Schlauchbildung - Leitelemente vorgesehen werden. Die Falzkanten können auch hier von geeigneten Prägewerkzeugen vorgeprägt sein. Die beiden Laschen überlappen sich mit ihren Seitenkanten und werden miteinander und/oder mit Bereichen der Dreieckstaschen miteinander verbunden. Dazu können gleichartige Fügeverfahren und Fügevorrichtungen genutzt werden, wie sie im Zusammenhang mit der Schlauchbildung bereits beschrieben wurden.

Während der Bodenbildung können in oder an dem entstehenden Boden weitere Werkstücke befestigt werden. Insbesondere ist dies ein Schlauchstück oder ein Ventilblatt. Beide Elemente stellen im fertigen Sack ein Ventil dar. Nach der Bodenschließung ist es möglich, ein Bodendeckblatt aufzubringen, welches einerseits den Boden verstärkt, aber auch andererseits die Dreieckstaschen und die eingeschlagenen Laschen nochmals miteinander verbindet.

In einer vorteilhaften Ausführungsform der Erfindung sind die Bahnen oder Werkstücke, aus denen Ventile und/oder Bodendeckblätter entstehen, im Gegensatz zu dem Flachbahnmaterial mehrschichtig und jeweils außenseitig mit einer Kunststoffbeschichtung versehen. Nur eine oder mehrere Innenlagen umfassen ein Kunststoffvlies. Diese Maßnahme hat zur Folge, dass der Boden eine im Vergleich zum übrigen Sack eine höhere Steifigkeit aufweist, so dass sich der Sack in Sackbefülleinrichtungen einfacher greifen, öffnen und/oder befüllen lässt.

In einer besonders bevorzugten Ausführungsform der Erfindung wird ein Flachbahnmaterial verwendet, welches aus zumindest zwei Schichten aufgebaut ist. Eine erste Schicht umfasst dabei das Kunststoffvliesmaterial, während eine zweite Schicht eine Kunststoffbeschichtung ist. Vorteilhafterweise ist diese Kunststoffschicht eine Außenschicht. Sie kann beispielsweise auf ein Vliesmaterial auflaminiert oder aufextrudiert sein. Zur Herstellung der Bodendeckblätter und/oder der Ventilmaterials kann ein Teil des so erzeugten Flachbahnmaterial nochmals von der zweiten Seite beschichtet werden, so dass eine zweiseitige Beschichtung entsteht.

In weiterer vorteilhafter Ausgestaltung der Erfindung wird der Schlauch nun so gebildet, dass die Kunststoffschicht nach der Schlauchbildung außen liegt. Ist das Material zweischichtig, liegt folglich die Vliesschicht innen. Diese Vorgehensweise bietet Vorteile bei der Anformung eines Bodens. So weisen die späteren Dreieckstaschen auf ihren Außenseiten ebenfalls die Kunststoffbeschichtung auf, so dass nach dem Zurückfalten der Bodenlaschen die Kunststoffschichten der Dreieckstaschen auf sich selbst gefaltet sind. Dieses ermöglicht ein Fügen mittels eines Heißluftschweißverfahrens, bei dem die Kunststoffschichten angeschmolzen werden und nach dem Verpressen und Erkalten eine feste Verbindung bilden.

Auch die Kunststoffschichten der zurück gefalteten Laschen weisen nun nach außen. Hierauf können nun Bodendeckblätter aufgebracht, vorzugsweise aufgeschweißt, werden, bei denen die Kunststoffschicht den Laschen zugewandt ist. Insgesamt kann auf diese Weise ein sehr haltbarer Sackboden ausgebildet werden, da im Wesentlichen Kunststoffschichten der Bestandteile miteinander verbunden werden.

Weitere Ausführungsbeispiele der Erfindung gehen aus der gegenständlichen Beschreibung und den Ansprüchen hervor.
Die einzelnen Figuren zeigen:
- Fig. 1: Prinzipskizze einer Schlauchbildung aus vlieshaltigem Material
- Fig. 2: Prinzipskizze zur Sackbildung aus einem Schlauch mit vlieshaltigem Material
- Fig. 3: Prinzipskizze einer Sackbildung aus Flachbahnmaterial

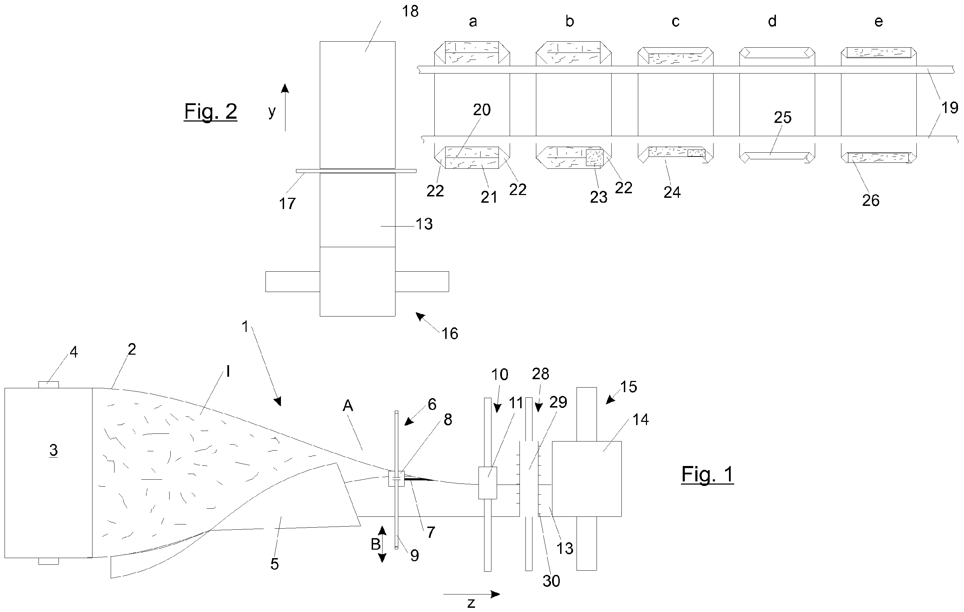

Fig. 1 zeigt eine Prinzipskizze zur Schlauchbildung aus einem vlieshaltigen Material. Diese Schlauchbildung erfolgt in einer Schlauchbildungsstation 1. Der Schlauchbildungsstation 1 wird ein Flachbahnmaterial 2 zugeführt, welches in Form eines Wickels 3 bereitgestellt wird. Dieser Wickel 3 kann auf oder mit einem Wickelträger 4 rotieren, welcher beispielsweise im Maschinengestell der Schlauchbildungsstation oder im Gestell einer Abwickelstation gelagert ist.

Das Flachbahnmaterial 2 umfasst in der dargestellten Ausführungsform zwei Schichten. Die erste Schicht umfasst ein Kunststoffmaterial und wird, da diese Schicht nach der Schlauchbildung nach außen gerichtet ist, mit dem Buchstaben A gekennzeichnet. Die zweite Schicht, die nach der Schlauchbildung nach innen gerichtet ist, wird mit dem Buchstaben I gekennzeichnet. Die Schicht I besteht dabei aus einem Vliesmaterial. Dieses wird in der Figur durch unregelmäßige und ungleichmäßige Striche verdeutlicht.

Das Flachbahnmaterial 2 wird von einer oder mehreren Vorzug- und/oder Vorschubeinrichtungen in Transportrichtung z transportiert. Vorzug- oder Vorschubeinrichtungen, die Transportwalzenpaaren umfassen können, sind in der Figur 1 nicht dargestellt. Nach dem Abwickeln wird zunächst eine Seite des Flachbahnmaterials 2 mittels eines Leitblechs 5 auf sich selbst umgeschlagen. Es können auch weitere Leitelemente zur zeitgleichen Bildung von Seitenfalten vorgesehen sein, welche allerdings nicht dargestellt sind.

Kurz nach dem Beginn des Umschlagens der ersten Seite des Flachbahnmaterials 2 wird auch dessen zweite Seite umgeschlagen. Beide Seiten werden soweit eingeschlagen, dass die Seitenränder anschließend aufeinander liegen. Das Umschlagen der zweiten Seite erfolgt wiederum mit einem Leitelement, das wie das Leitblech 5 ausgestaltet sein kann. Dieses Leitelement ist der Übersichtlichkeit halber nicht eingezeichnet.

Bevor sich die beiden Seitenränder berühren, wird der erste Seitenrand auf der Außenseite, die mit dem zweiten Seitenrand in Kontakt kommt, eine Behandlung vorgenommen, die dem Verbinden der beiden Seitenränder dient. In der Figur 1 ist eine Extrusionseinrichtung 6 dargestellt, mit welcher eine Kunststoffschmelze auf den Rand der ersten Seite aufgetragen wird. Direkt anschließend wird die zweite Seite mit ihrer Innenseite auf die erste Seite aufgebracht. Hierbei wird eine Vliesschicht mit einer Kunststoffschicht verbunden, wobei die Kunststoffschmelze eine sehr feste Verbindung bewirkt. Das aufgetragene Extrudat 7 ist in der Figur 1 als dicke Linie dargestellt.

Die Extrusionseinrichtung 6 umfasst einen Extrusionskopf 8, dem über nicht gezeigte Zuführleitungen die Kunststoffschmelze zugeführt wird. Der Extrusionskopf 8 kann in Richtung des Doppelpfeils B quer zur Transportrichtung des Flachbahnmaterials 2 verschiebbar gelagert sein. Hierzu dient eine Traverse 9, die im Maschinengestell der Schlauchbildungsstation 1 befestigt sein kann.

Nach dem Auftragen des Extrudats und dem Aufbringen der zweiten Seite kann die Fügenaht mit einer Anspressvorrichtung 10 zusätzlich verpresst werden. Diese Anpressvorrichtung umfasst vorteilhafterweise eine Anpresswalze 11, welche Bestandteil eines Presswalzenpaares sein kann. Die Anpresswalze 11 ist über eine Achse oder Welle 12 relativ zum Maschinengestell rotierbar. Die Anpresswalze kann auch zur Kühlung der Fügenaht verwendet werden. Die Walze kann dazu so ausgestaltet sein, dass sie von einem Kühlmedium durchströmt werden kann. Bei Kontakt der Walze kann diese dann von der Fügenaht Wärme abführen, so dass die Fügenaht schneller eine ausreichende Haltbarkeit aufweist. Es sind jedoch auch weitere Kühlverfahren und - vorrichtungen denkbar, wie zum Beispiel eine Einrichtung zum Aufblasen von Kühlluft.

Nach dem Verpressen der Fügenaht kann der so entstandene Schlauch 13 auf einen neuen Wickel 14 einer Wickelstation 15 aufgewickelt werden.

Zur Sicherstellung der späteren Entlüftung des Sacks während oder nach dessen Befüllung müssen Entlüftungsöffnungen vorgesehen sein. Hierzu ist eine Perforiereinrichtung 28 vorgesehen, welche eine Perforierwalze 29 umfassen kann, welche relativ zum Maschinengestell rotiert und auf ihrem Außenumfang Nadeln 30 tragen kann, welche in das Schlauchmaterial eindringen und so Entlüftungslöcher herstellen kann. Auch auf andere Arten, beispielsweise berührungslos, arbeitenden Perforiereinrichtung sind denkbar. Auch die Anordnung der Perforiereinrichtung ist nicht auf die gezeigte Anordnung beschränkt. Die Perforiereinrichtung kann auch vor der eigentlichen Schlauchbildungseinrichtung angeordnet sein. Auch eine Anordnung direkt vor der Trenneinrichtung ist denkbar. In jedem Fall muss die Perforation jedoch vor der Vereinzelung des Schlauches zu Schlauchstücken erfolgt sein.

In der Figur 2 sind nun die Verarbeitungsschritte zur Bildung von einzelnen Säcken aus dem Schlauch 13 dargestellt. Dieser Schlauch, der als Wickel 14 aus der Schlauchbildungsstation 1 in die Abwickelvorrichtung 16 transportiert wurde, wird mittels einer Trenneinrichtung 17, welche beispielsweise eine quer zur anfänglichen Transportrichtung y verschiebbare Schneidklinge umfasst, in einzelne Schlauchstücke 18 vereinzelt.

Anschließend wird die Transportrichtung der Schlauchstücke 18 verändert, so dass diese nun quer zu ihrer Erstreckungsrichtung, die in Richtung y zeigt, in Richtung z weiter transportiert werden. Hierzu ist eine Transportvorrichtung 19 vorgesehen, welche beispielsweise als Doppelriemenförderer ausgestaltet sein kann.

Im ersten Bearbeitungsschritt a zur Ausbildung der Sackböden, der in der Bodenaufziehstation erfolgt, werden die Schlauchstückenden zunächst aufgezogen. Dieser Schritt kann mithilfe von Saugern erfolgen, welche an den Enden die beiden Lagen etwas auseinander ziehen. Mit Spreizern können nun die Lagen in eine Ebene gebracht und ausgestrichen werden, wobei der Boden entlang der so genannten Bodenmittenlinie 20 umgeklappt wird. Die derart aufgezogenen Enden bilden nun ein Bodenrechteck 21 mit seitlichen Dreieckstaschen 22. In der Figur 2 sind nur die entsprechenden Elemente des unteren Endes des Schlauchstücks 18 mit Bezugszeichen versehen. Diese gelten sinngemäß jedoch auch für das andere Ende des Schlauchstücks. In der Figur ist erkennbar, dass bei den Dreieckstaschen die Kunststoffschicht nach außen zeigt, wogegen bei dem Bodenrechteck die Vliesschicht sichtbar ist.

Im Bearbeitungsschritt b kann nun ein Ventilzettel 23 auf ein offenes Ende des Schlauchstücks 18 aufgebracht und dort befestigt werden. Das Befestigen erfolgt vorteilhafterweise mittels Heißluftschweißen, wobei der Ventilzettel 23 zumindest an der Dreieckstasche 22 befestigt wird.

Im Bearbeitungsschritt c werden nun die äußeren Laschen 24 des Bodenrechts 21 soweit zurückgefaltet, dass die äußere Kante einer Lasche 24 über die Bodenmittenlinie 20 hinweg bewegt wird. Das Zurückfalten erfolgt dabei beispielsweise mit Leitelementen, wie beispielsweise mit Leitblechen. Die Bereiche der Dreieckstaschen, die bei diesem Vorgang ebenfalls mit zurück gefaltet werden, können miteinander verbunden werden. Anstelle der äußeren Laschen 24 können auch die inneren Laschen 25 zurück gefaltet werden.

Das Zurückfalten der inneren Laschen 25 erfolgt jedoch vorzugsweise im Verfahrensschritt d, wobei nun die innere Lasche 25 die äußere Lasche 24 in einem Überdeckungsbereich überdeckt. In diesem Überdeckungsbereich können beide Laschen miteinander verbunden werden, so dass bereits jetzt ein brauchbarer Sackboden entstanden ist. Da auch der Ventilzettel 23 eingeschlagen wurde, ist auf diese Weise ein Ventilschlauch entstanden, der die Befüllung des Sackes ermöglicht, aber einen Austritt des Befüllgutes nach dem Befüllen vermeidet.

In einer besonders bevorzugten Ausführungsform der Erfindung erfolgt noch ein weiterer Bearbeitungsschritt e, bei dem auf die bereits geschlossenen Böden jeweils ein Bodendeckblatt 26 aufgetragen und vorzugsweise mit einem Heißluftschweißverfahren befestigt wird. Das Bodendeckblatt 26 ist dabei vorzugsweise so dimensioniert, dass es Bereiche der Laschen 24 und 25 sowie Bereiche der Dreieckstaschen 22 überdeckt. Es wird zudem mit seiner Kunststoffschicht auf den Boden gelegt, so dass die Kunststoffschichten einander zugewandt sind. Dies ermöglicht eine sehr haltbare Verbindung, welche durch Heißluftschweißen herstellbar ist. Im Bereich der Überdeckung der Laschen 24 und 25 kann die Lasche 25 mit Ausstanzungen versehen sein, so dass das Bodendeckblatt 25 auch im Bereich dieser Überdeckung einen direkten Kontakt zu der Lasche 24 hat. Auf ähnliche Weise kann ein direkter Kontakt des Bodendeckblatts 26 mit dem Ventilzettel 23 hergestellt werden.

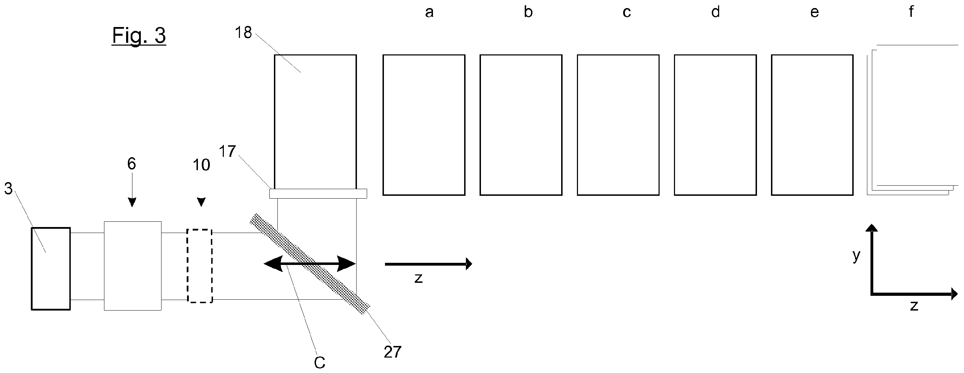

Die Figur 3 zeigt in einer schematischen Darstellung nochmals die einzelnen Verfahrensschritte zur Herstellung von Säcken aus einem Flachbahnmaterial. Bei diesem Ausführungsbeispiel wird jedoch auf das Aufwickeln des Schlauches, das Transportieren des Wickels und das erneute Abwickeln des Schlauches verzichtet. Anstelle dieser Einrichtungen ist eine Umlenkeinrichtung 27 vorgesehen, welche den fertigen Schlauch 13 aus der Transportrichtung z in die Transportrichtung y umlenkt. Diese Umlenkeinrichtung ist entlang des Doppelpfeils C in oder entgegen der Richtung z verschiebbar, so dass die Lage der Seitenkante nach der Umlenkung in oder entgegen der Richtung z veränderbar ist.

In der Figur 3 ist zusätzlich noch ein Verfahrensschritt f dargestellt, bei dem mehrerer Säcke gestapelt werden, bevor sie beispielsweise in einem Transportbehälter verpackt werden.

| **Bezugszeichenliste** | |
|---|---|
| 1 | Schlauchbildungsstation |
| 2 | Flachbahnmaterial |
| 3 | Wickel |
| 4 | Wickelträger |
| 5 | Leitblech |
| 6 | Extrusionseinrichtung |
| 7 | Extrudat |
| 8 | Extrusionskopf |
| 9 | Traverse |
| 10 | Anpressvorrichtung |
| 11 | Anpresswalze |
| 12 | Achse oder Welle |
| 13 | Schlauch |
| 14 | Wickel |
| 15 | Wickelstation |
| 16 | Abwickelvorrichtung |
| 17 | Trenneinrichtung |
| 18 | Schlauchstück |
| 19 | Transportvorrichtung |
| 20 | Bodenmittenlinie |
| 21 | Bodenrechteck |
| 22 | Dreieckstaschen |
| 23 | Ventilzettel |
| 24 | äußere Lasche |
| 25 | innere Lasche |
| 26 | Bodendeckblatt |
| 27 | Umlenkeinrichtung |
| 28 | Perforiereinrichtung |
| 29 | Perforierwalze |
| 30 | Nadeln |
| A | Außenseite des Flachbahnmaterials 2 |
| I | Innenseite des Flachbahnmaterials 2 |
| a | erster Bearbeitungsschritt |
| b | zweiter Bearbeitungsschritt |
| c | dritter Bearbeitungsschritt |
| d | vierter Bearbeitungsschritt |
| e | fünfter Bearbeitungsschritt |
| f | Stapelung von Säcken |
| y | anfängliche Transportrichtung des Schlauchstücks |
| z | Transportrichtung des Flachbahnmaterials 2 bzw. des Schlauches |
| B | Doppelpfeil |
| C | Doppelpfeil |

## Patentansprüche

1. Verfahren zur Herstellung eines Sacks oder eines Beutels, wobei das Sack- oder das Beutelmaterial zumindest zum Teil ein Kunststoffvliesmaterial umfasst, wobei die folgenden Verfahrensschritte durchgeführt werden:
- Bereitstellen eines Flachbahnmaterials (2), welches zumindest zum Teil das Kunststoffvliesmaterial umfasst, wobei ein Flachbahnmaterial (2) mit zumindest zwei Schichten verwendet wird,
- Bilden eines Schlauches (13) aus dem Flachbahnmaterial (2), wobei die Seitenbereiche des Flachbahnmaterials (2) unter Ausbildung einer Überlappung aufeinander gelegt und miteinander verbunden werden, so dass der Schlauch (13) zwei Materiallagen umfasst,
- Vereinzeln des Schlauches (13) zu Schlauchstücken (18) und
- Anformen eines Bodens (24, 25, 26) an zumindest einem Ende eines Schlauchstücks (18)
**dadurch gekennzeichnet,**
- **dass** eine erste Schicht ein Vliesmaterial umfasst und eine zweite Schicht eine Kunststoffbeschichtung ist,
- **dass** das Flachbahnmaterial (2) in Form eines Wickels (3) bereitgestellt wird,
- **dass** anschließend die Schlauchbildung durchgeführt wird, wobei nach dem Bilden des Schlauches (13) die Kunststoffbeschichtung nach außen (A) und die Schicht, welche Vliesmaterial umfasst, nach innen (I) gerichtet ist, und
- **dass** das Flachbahnmaterial (2) und/oder der Schlauch (13) perforiert werden, wobei die Perforation vor der Vereinzelung des Schlauches (13) zu Schlauchstücken (18) erfolgt.

2. Verfahren nach dem vorstehenden Anspruch,
**dadurch gekennzeichnet, dass**
die sich überlappenden Seitenbereiche des Flachbahnmaterials (13) mit zumindest einem der folgenden Verfahren miteinander verbunden werden:
- Aufbringen eines Extrudats,
- Siegeln durch Heißlufteinwirkung,
- Aufbringen eines Klebstoffes,
- Beaufschlagung von Ultraschall und
- Einwirkung von elektromagnetischer Strahlung.

3. Verfahren nach einem der vorstehenden Ansprüche,
**dadurch gekennzeichnet, dass**
die Überlappung der Seitenbereich nach dessen Verbindung gekühlt wird.

4. Verfahren nach einem der vorstehenden Ansprüche,
**dadurch gekennzeichnet, dass**
die Transportrichtung (z) der vereinzelten Schlauchstücke (18) gegenüber der Transportrichtung (y) des Schlauches (13), von welchem die Schlauchstücke (18) vereinzelt werden, um 90 Grad geändert wird, so dass anschließend die Schlauchstücke (18) quer zu ihrer Erstreckungsrichtung transportiert werden.

5. Verfahren nach einem der vorstehenden Ansprüche,
**dadurch gekennzeichnet,**
**dass** zur Anformung eines Bodens (24, 25, 26) an einem Ende des Schlauchstücks (18) zunächst zumindest eine Materiallage um eine erste Linie (20) umgeklappt wird, so dass ein offenes Ende entsteht, welches zwei Dreieckstaschen (22) und ein Bodenrechteck (21) mit zwei Laschen (24, 25) umfasst,
**dass** anschließend die Laschen (24, 25) um Linien, welche parallel zur ersten Linie (20) liegen, zurückgeklappt werden und
**dass** dann die Laschen (24, 25) miteinander und/oder mit den Dreieckstaschen (22) verbunden werden.

6. Verfahren nach einem der vorstehenden Ansprüche,
**dadurch gekennzeichnet, dass**
bei dem Anformen des Bodens (24, 25, 26) weitere Werkstücke wie ein Innenriegel, ein Ventil, ein Ventilblatt (23) oder ein Bodendeckblatt (26) an zumindest einem der Bestandteile des Bodens (22, 24, 25) befestigt wird.

7. Verfahren nach einem der vorstehenden Ansprüche,
**dadurch gekennzeichnet, dass**
der Schlauch (13) vor der Vereinzelung zu Schlauchstücken (18) zu einem Wickel (3) aufgewickelt und von diesem Wickel (3) wieder abgewickelt wird.

## Claims

1. Method for producing a sack or a bag, wherein the sack or the bag material comprises, at least in part, a plastic non-woven material,
wherein the following process steps are carried out:
- provision of a flat web material (2) which at least partially comprises the plastic non-woven material, wherein a flat web material (2) is used comprising at least two layers,
- formation of a tube (13) from the flat web material (2), wherein the side regions of the flat web material (2) are laid one on top of the other so that the tube (13) comprises two material layers,
- separation of the tube (13) into individual tube pieces (18), and
- formation of a bottom (24, 25, 26) on at least one end of a tube piece (18) **characterized In that**
- a first layer comprises a non-woven material, while a second layer is a plastic coating,
- the flat web material (2) is provided in the form of a spool (3), wherein, after formation of the tube (13), the plastic coating is directed outwards (A), while the layer comprising non-woven material is directed inwards (I), and
- the flat web material (2) and/or the tube (13) are perforated, wherein the perforation takes place before the separation of the tube (13) into individual tube pieces (18).

2. Method according to the preceding claim,
**characterized in that**
the overlapping side regions of the flat web material (13) are connected to one another by means of at least one of the following methods:
- application of an extrudate,
- sealing by hot air,
- application of an adhesive,
- exposure to ultrasound, and
- exposure to electromagnetic radiation.

3. Method according to one of the preceding claims,
**characterized in that**
the overlapping of the side region is cooled after its connection.

4. Method according to one of the preceding claims,
**characterized in that**
the transport direction (z) of the individual tube pieces (18) is changed through 90 degrees with respect to the transport direction (y) of the tube (13) from which the tube pieces (18) are individually separated, so that subsequently the tube pieces (18) are transported transversely to their longitudinal direction.

5. Method according to one of the preceding claims,
**characterized in that**
at least one material layer is folded along a first line (20) to form a bottom (24, 25, 26) at one end of the tube piece (18), leading to an open end comprising two triangular pockets (22) and a bottom rectangle (21) with two tabs (24, 25)
the tabs (24, 25) are then folded back along lines which lie parallel to the first line (20), and
the tabs (24, 25) are then connected to one another and/or to the triangular pockets (22).

6. Method according to one of the preceding claims,
**characterized in that**
further work pieces such as an inner lock, a valve, a valve sheet (23) or a bottom cover sheet (26) are attached to at least one of the components of the bottom (24, 25, 26) when the bottom (22, 24, 25) is formed.

7. Method according to one of the preceding claims,
**characterized in that**
the tube (13) is wound into a spool (3) before the separation into individual tube pieces (18), and then again unwound from this spool (3).

## Revendications

1. Procédé de fabrication d'un sac ou d'un sachet, le matériau de sac ou de sachet comprenant au moins partiellement un voile de matière plastique, les étapes de procédé suivantes étant réalisées :
- fourniture d'un matériau en bande plate (2) qui comprend au moins partiellement le voile de matière plastique, un matériau en bande plate (2) avec au moins deux couches étant utilisé,
- formation d'un tuyau (13) à partir du matériau en bande plate (2), les zones latérales du matériau en bande plate (2) étant placées l'une sur l'autre en formant un chevauchement et étant raccordées l'une à l'autre de telle sorte que le tuyau (13) comprend deux nappes de matériau,
- séparation du tuyau (13) en morceaux de tuyau (18) et
- formation d'un fond (24, 25, 26) à au moins une extrémité d'un morceau de tuyau (18),
**caractérisé en ce**
- **qu'**une première couche comprend un voile, et une deuxième couche est un revêtement en matière plastique,
- **en ce que** le matériau en bande plate (2) est fourni sous la forme d'un rouleau (3),
- **en ce que,** ensuite, la formation du tuyau est réalisée, le revêtement en matière plastique étant, après la réalisation du tuyau (13), dirigé vers l'extérieur (A), et la couche qui comprend le voile étant dirigée vers l'intérieur (I), et
- **en ce que** le matériau en bande plate (2) et/ou le tuyau (13) sont perforés, la perforation étant effectuée avant la séparation du tuyau (13) en morceaux de tuyau (18).

2. Procédé selon la revendication précédente,
**caractérisé en ce que**
les zones latérales en chevauchement du matériau en bande plate (13) sont raccordées entre elles avec au moins l'un des procédés suivantes :
- application d'un extrudat,
- scellement par action d'air chaud,
- application d'une colle,
- exposition à des ultrasons et
- action d'un rayonnement électromagnétique.

3. Procédé selon l'une des revendications précédentes,
**caractérisé en ce que**
le chevauchement des zone latérales est refroidi après leur raccordement.

4. Procédé selon l'une des revendications précédentes,
**caractérisé en ce que**
la direction de transport (z) des morceaux de tuyau (18) séparés par rapport à la direction de transport (y) du tuyau (13) duquel les morceaux de tuyau (18) sont séparés est modifiée de 90 degrés, de telle sorte qu'ensuite les morceaux de tuyau (18) sont transportés transversalement à leur direction d'extension.

5. Procédé selon l'une des revendications précédentes,
**caractérisé en ce que,**
pour la formation d'un fond (24, 25, 26) à une extrémité du morceau de tuyau (18), au moins une nappe de matériau est d'abord repliée autour d'une première ligne (20) de telle sorte qu'une extrémité ouverte est créée, qui comprend deux poches triangulaires (22) et un rectangle de fond (21) avec deux languettes (24, 25),
**en ce que,** ensuite, les languettes (24, 25) sont rabattues en retour autour de lignes qui sont parallèles à la première ligne (20), et
**en ce que** les languettes (24, 25) sont ensuite raccordées l'une à l'autre et/ou raccordées aux poches triangulaires (22).

6. Procédé selon l'une des revendications précédentes,
**caractérisé en ce que,**
lors de la formation du fond (24, 25, 26), d'autres pièces telles qu'une garniture intérieure, une valve, un clapet de valve (23) ou une couverture de fond (26), sont fixées sur au moins un des composants du fond (22, 24, 25).

7. Procédé selon l'une des revendications précédentes,
**caractérisé en ce que**
le tuyau (13) est, avant la séparation en morceaux de tuyau (18), enroulé en un rouleau (3) et de nouveau déroulé à partir de ce rouleau (3).
